Europäisches Patentamt

European Patent Office

Office européen des brevets

(11) Veröffentlichungsnummer: **0 321 646 B1**

## (12) EUROPÄISCHE PATENTSCHRIFT

(45) Veröffentlichungstag der Patentschrift: **11.11.92**

(21) Anmeldenummer: **88111465.6**

(22) Anmeldetag: **16.07.88**

(51) Int. Cl.⁵: **H02K 5/22**

(54) **Elektromotor einer Kreiselpumpe.**

(30) Priorität: **19.12.87 DE 3743168**

(43) Veröffentlichungstag der Anmeldung:
**28.06.89 Patentblatt 89/26**

(45) Bekanntmachung des Hinweises auf die
Patenterteilung:
**11.11.92 Patentblatt 92/46**

(84) Benannte Vertragsstaaten:
**AT BE CH DE ES FR GB GR IT LI LU NL SE**

(56) Entgegenhaltungen:
**EP-A- 0 056 756      DE-A- 3 435 289**
**DE-A- 3 509 188      GB-A- 2 064 230**
**US-A- 4 547 689      US-A- 4 748 355**

(73) Patentinhaber: **WILO GmbH**
**Nortkirchenstrasse 100**
**W-4600 Dortmund 30(DE)**

(72) Erfinder: **Naasner, Günter**
**Margeritenstrasse 40 29**
**W-4152 Kempen 1 1(DE)**
Erfinder: **Strelow, Günter**
**Vierhausstrasse 37**
**W-4630 Bochum(DE)**

(74) Vertreter: **Cohausz & Florack Patentanwälte**
**Postfach 14 01 61 Schumannstrasse 97**
**W-4000 Düsseldorf 1(DE)**

## Beschreibung

Die Erfindung betrifft einen Elektromotor einer Kreiselpumpe mit einem am Wicklungskopf befestigten Kontaktblock, an dessen Kontakten die Wicklungsdrahtenden direkt befestigt sind, wobei ein Wahlstecker vorgesehen ist, durch dessen unterschiedliche Einsteckstellungen die gewünschte Drehzahl und/oder die gewünschte Spannung wählbar ist.

Aus der DE-OS 34 35 289 ist ein solcher Elektromotor bekannt. Bei diesem bekannten Motor sind zwischen Wahlstecker und Wicklungsdrähten des Wicklungskopfes zahlreiche Kontakte, Leitungen und Teile, um Verbindungen herzustellen. Dies ist in der Herstellung aufwendig und Ursache von Fehlerquellen.

Ferner ist es aus der US 4 547 689 bekannt, einen Kontaktblock am Motorengehäuse zu befestigen. Hierdurch sind zwischen dem Wicklungskopf und dem Kontaktblock zusätzliche Verbindungen notwendig, die Herstellung und Montage erschweren.

Aufgabe der Erfindung ist es, einen Elektromotor der eingangs genannten Art so zu verbessern, daß Herstellung, Montage und Nutzung vereinfacht und die Zahl der Kontakte reduziert sind.

Diese Aufgabe wird erfindungsgemäß dadurch gelöst, daß der Wahlstecker unmittelbar am Kontaktblock des Wicklungskopfes angesteckt ist.

Ein solcher Elektromotor weist folgende Vorteile auf:
- eine drastische Reduzierung der erforderlichen Kontakte,
- ein direktes Anschlagen der Wickeldrähte an die Umschaltkontakte,
- ein Ausliefern von Standardmotoren ist ohne Klemmenkasten möglich,
- verschiedene Stecksysteme sind vom Kunden anwendbar und wechselbar,
- der Motorwechsel ist möglich, ohne den Klemmenkasten mit zu wechseln oder auch nur zu öffnen,
- eine eindeutige Trennung vom heißen Motorenraum zum Klemmenkasten,
- bei Automatikbetrieb kein überflüssiger Klemmenkasten.

Damit ist auch eine Benutzerschnittstelle geschaffen, die es dem Anwender ermöglicht, Veränderungen im Anschlußsystem selber auf einfache Weise vorzunehmen. Sei es das Verändern der Drehzahl oder das Abnehmen des Schaltkastens beim Motorwechsel oder auch das Anbringen eines Anschlußsteckers für Automatik-Schaltgeräte.

Vorzugsweise wird vorgeschlagen, daß der Wahlstecker durch die Gehäusewand des Motors hindurchreicht. Besonders vorteilhaft ist es, wenn der Wahlstecker außen auf dem Motorengehäuse aufsitzt und seine Kontakte durch die Gehäusewand des Motors hindurchreichen bis zu den Kontakten des Kontaktblocks. Alternativ kann aber auch der Wahlstecker auf einer außerhalb des Motorengehäuses befindlichen Leitungsplatine oder einem anderen elektrischen Leitungselement aufsitzen und seine Kontakte durch die Platine und durch die Gehäusewand des Motors hindurchreichen bis zu den Kontakten des Kontaktblocks. Hierbei kann die Platine zusätzlich im oder am Klemmenkasten befestigt sein.

Besonders vorteilhaft ist es, wenn außen am Motorengehäuse eine Trägerplatte befestigt ist, auf der der Klemmenkasten befestigt ist oder die den Klemmenkasten bildet und durch die der Wahlstecker hindurchreicht. Auch ist von Vorteil, daß an dem Kontaktblock wahlweise ein Anschlußstecker für Automatik-Schaltgeräte befestigbar ist.

Zwei Ausführungsbeispiele der Erfindung sind in den Zeichnungen dargestellt und werden im folgenden näher beschrieben. Es zeigen:

Fig. 1 einen senkrechten Längsschnitt durch den oberen Bereich eines Elektromotors einer Pumpe mit einem durch eine Öffnung der Gehäusewand reichenden Wahlstecker;

Fig. 2 einen Schnitt nach Fig. 1 mit einem außen aufsitzenden Wahlstecker, dessen Kontaktstifte durch die Gehäusewand und durch die Leitungsplatine hindurchreichen;

Fig. 3 einen Schnitt nach Fig. 1 mit abgenommenem Wahlstecker und abgenommenem Klemmenkasten und statt dessen aufgestecktem Anschluß (Automatik)-Stecker.

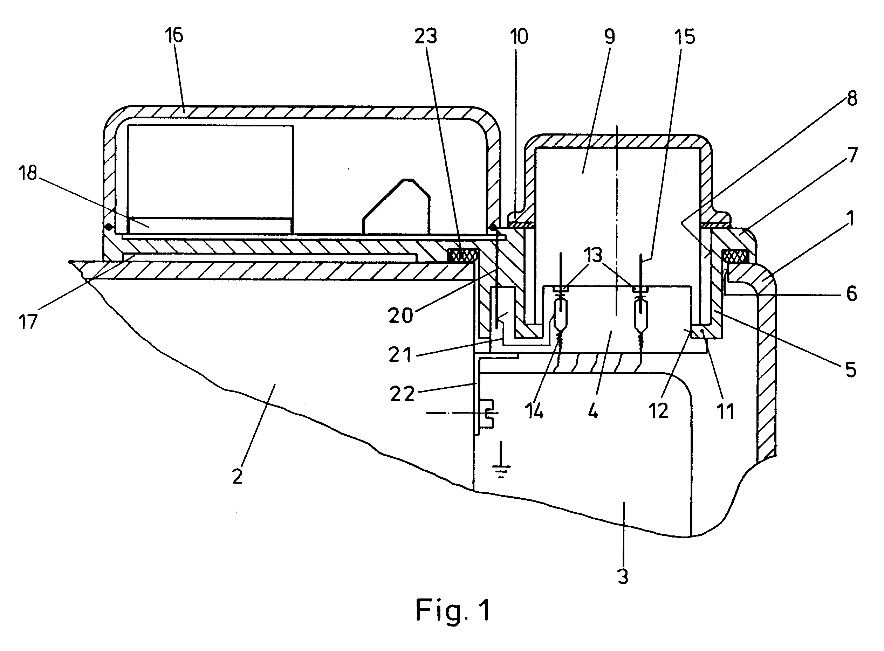

1 auf, innerhalb derer der nicht dargestellte Rotor und der Stator 2 zusammen mit dem stirnseitigen Wicklungskopf 3 angeordnet ist. An der Oberseite des Wicklungskopfes 3 ist ein Kontaktblock 4 nach dem Ausführungsbeispiel entsprechend Fig. 1 innerhalb des Gehäuses 1 befestigt. Der Kontaktblock 4 kann direkt am Wicklungskopf 3 befestigt sein oder entsprechend Fig. 1 an der Unterseite des oberen Bereiches der Gehäusewand 1. Hierbei ist er entsprechend Fig. 1 an der Unterseite eines Halteteils 5 befestigt, das topfförmig durch eine obere Öffnung 6 nach innen hindurchreicht, wobei der flanschähnliche obere Rand 7 des Halteteils 5 den Rand der Öffnung 6 außen übergreift. Das Halteteil 5 bildet damit eine nach oben hin offene Einstecköffnung 8, in der ein Wahlstecker 9 von oben einschiebbar ist. Hierbei besitzt der Wahlstecker 9 im oberen Bereich rundum einen vorspringenden Kragen 10, der oben auf dem Rand 7 zur Auflage kommt.

Im Boden 11 des Halteteils 5 befindet sich eine Öffnung 12, durch die von unten ein Bereich des Kontaktblockes 4 hindurchgesteckt ist. Der Kontaktblock 4 weist an seiner Oberseite Öffnungen 13 auf, die zu Kontaktfedern 14 führen. An diesen Kontaktfedern 14 sind die Wicklungsdrähte des Wicklungskopfes 3 elektrisch angeschlossen. Diese Öffnungen 13 stimmen mit den unten aus dem Wahlstecker 9 herausragenden Kontaktstiften 14 überein, so daß beim Einstecken des Wahlsteckers 9 die Kontaktstifte 15 in die Kontaktfedern 14 eindringen.

Der Wahlstecker 9 kann in unterschiedlichen Drehstellungen von oben eingesteckt werden, so daß Kontaktstifte 15 unterschiedliche Kontaktfedern 14 erreichen. Hierdurch können in bekannter Weise unterschiedliche Drehzahlen und/oder Spannnungen erzeugt werden.

An dem Halteteil 5 ist auf der der Pumpe zugewandten Seite das Gehäuse eines Klemmenkastens 16 angeformt. Dieser Klemmenkasten trägt innen auf seinem Boden eine Leitungsplatine 17 mit elektrischen Bauteilen, z.B. auch für den externen Motoranschluß. Die Leitungsplatine 17 ist über nach unten durch den Boden hindurchragende Kontaktstifte 20 mit den Kontaktfedern 14 verbunden, wobei für diese Verbindung im Innern des Kontaktblocks 4 eine Federbrücke 21 befestigt ist.

Der Kontaktblock 4 kann durch am Stator oder Gehäuse befestigte Halteteile, insbesondere einen Winkel 22 insbesondere von unten gestützt sein. Ferner befindet sich unterhalb des Randes 7 ein Dichtring 23, der die Öffnung 6 oben rundum umgibt und ein Eindringen von Feuchtigkeit und Staub in das Gehäuseinnere verhindert.

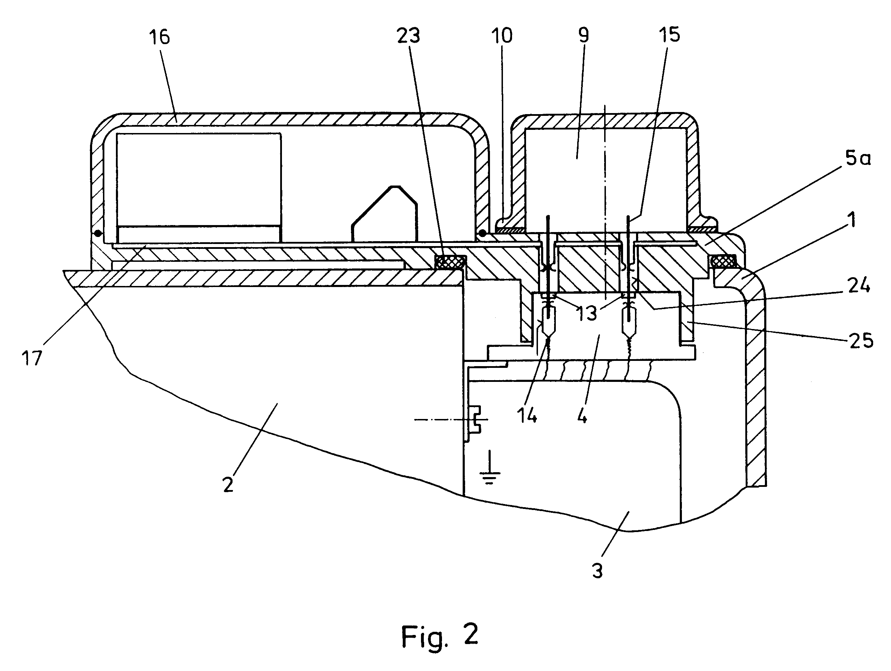

Das Ausführungsbeispiel nach Fig. 2 unterscheidet sich von dem nach Fig. 1 dadurch, daß das außen oben auf der Gehäusewand 1 aufliegende Halteteil im wesentlichen nur als Platte 5a ausgeführt ist, die am Gehäuse 1 befestigt ist und die wiederum den Klemmenkasten 16 trägt oder bildet. Der würfelförmige Wahlstecker 9 liegt oben auf der waagerechten Oberseite des Halteteils 5a mit seinem Kragen 10 abdichtend auf, und nur die Kontaktstifte 15 reichen senkrecht nach unten durch einzelne senkrechte Bohrungen ähnliche Öffnungen 24 hindurch und ragen über die Unterseite des Halteteils 5a hinaus, um in die Öffnungen 13 des Kontaktblockes 4 einzudringen und dort die Kontaktfedern 14 zu erreichen.

An der Unterseite des Halteteils 5 springt senkrecht ein Rand 25 vor, der einen nach unten hin offenen Hohlraum bildet, in dem der obere Bereich des Kontaktblockes 4 einliegt, so daß der Kontaktblock 4 vom Rand 25 umfaßt ist. In einer nicht dargestellten weiteren Alternative kann bei beiden Ausführungsbeispielen der Kontaktblock 4 direkt am Wicklungskopf 3 befestigt sein. Zur Befestigung der Wickeldrähte an den Kontaktfedern 14 können verschiedenste Verbindungstechniken, insbesondere die Klemm-Schneid-Technik verwendet werden.

Die Leitungsplatine 17 ragt im Ausführungsbeispiel nach Fig. 2 über den Klemmenkasten 16 hinaus und ist oberhalb des Kontaktblocks 4 im Material des Halteteils 5a eingebettet, wobei die Platine 17 mit den Öffnungen 24 übereinstimmende Öffnungen besitzt. An der Unter- oder Oberseite der Platine 17 ragen Kontaktelemente, insbesondere Kontaktfedern in die Öffnungen 24 hinein, die mit Leitungen der Platine 17 verbunden sind und die sich zusätzlich an die Kontaktstifte 15 des Wahlsteckers 9 anlegen. Damit kann auf einfachste Weise eine elektrische Verbindung zwischen Kontaktblock, Klemmenkasten und/oder Wahlstecker 9 erreicht werden.

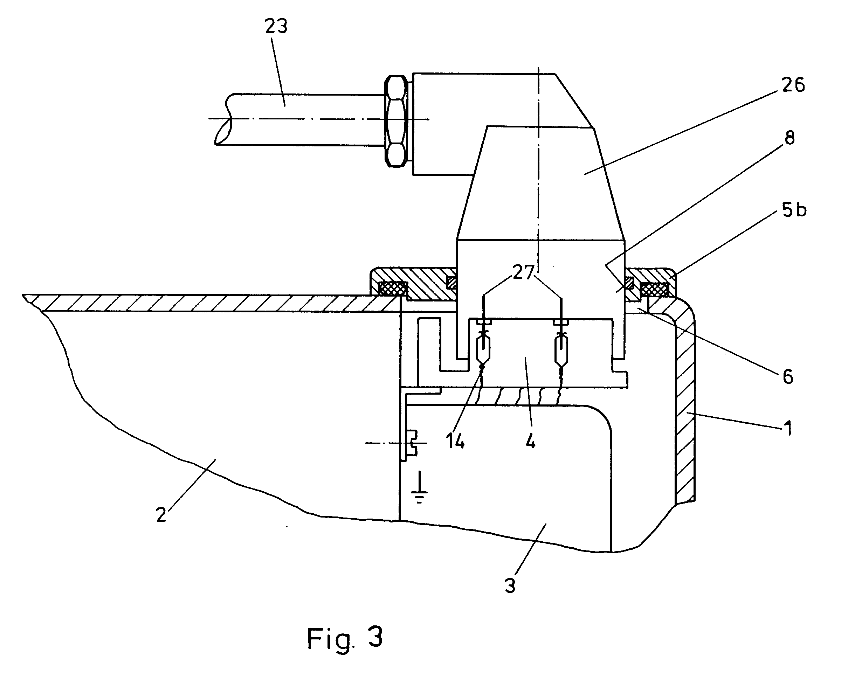

Beim Ausführungsbeispiel nach Fig. 3 ist das Halteteil 5b von einer verhältnismäßig kleinen waagerechten Platte gebildet, die nur die Öffnung 6 umgibt und wiederum selber eine Öffnung 8 aufweist, durch die der Wahlstecker 9 den Kontaktblock 4 erreicht. Statt eines Wahlsteckers kann aber auch, wie in Fig. 3 gezeigt, durch die Öffnung des Halteteils 5b ein Anschlußstecker 26, insbesondere ein Automatikstecker, gesteckt werden, der in gleicher Weise mit Kontaktstiften 27 die Kontaktfedern 14 des Kontaktblockes 4 erreicht. Hierzu ist zumindest der untere Bereich des Steckers 26 in seinen Abmessungen gleich ausgeführt wie der Wahlstecker 9. Über einen solchen Stecker 26 kann u.a. dem Motor Strom zugeführt werden, und es kann ferner eine Verbindung zu einem Schaltkasten über ein Kabel 28 geschaffen werden.

In einem nicht dargestellten Ausführungsbeispiel kann der Automatikstecker 26 und das Halteteil 5b auch einteilig ausgeführt sein.

## Patentansprüche

1. Elektromotor einer Kreiselpumpe mit einem am Wicklungskopf (3) befestigten Kontaktblock (4), an dessen Kontakten (14) die Wicklungsdrahtenden direkt befestigt sind, wobei ein Wahlstecker (9) vorgesehen ist, durch dessen unterschiedliche Einsteckstellungen die gewünschte Drehzahl und/oder die gewünschte Spannung wählbar ist, **dadurch gekennzeichnet,** daß der Wahlstecker (9) unmittelbar am Kontaktblock (4) des Wicklungskopfes (3) angesteckt ist.

2. Elektromotor nach Anspruch 1, **dadurch gekennzeichnet,** daß der Wahlstecker (9) durch die Gehäusewand (1) des Motors hindurchreicht.

3. Elektromotor nach Anspruch 1, **dadurch gekennzeichnet,** daß der Wahlstecker (9) außen auf dem Motorengehäuse aufsitzt und seine Kontakte (15) durch die Gehäusewand (1) des Motors hindurchreichen bis zu den Kontakten (14) des Kontaktblocks (4).

4. Elektromotor nach Anspruch 1, **dadurch gekennzeichnet,** daß der Wahlstecker (9) auf einer außerhalb des Motorengehäuses befindlichen Leitungsplatine (17) oder einem anderen elektrischen Leitungselement aufsitzt und seine Kontakte (15) durch die Platine (17) und durch die Gehäusewand (1) des Motors hindurchreichen bis zu den Kontakten (14) des Kontaktblocks (4).

5. Elektromotor nach Anspruch 4, **dadurch gekennzeichnet,** daß die Platine (17) zusätzlich an oder in einem Klemmenkasten (16) befestigt ist.

6. Elektromotor nach einem der Ansprüche 1 bis 4, **dadurch gekennzeichnet,** daß außen am Motorengehäuse eine Trägerplatte befestigt ist, auf der der Klemmenkasten (16) befestigt ist oder die den Klemmenkasten bildet und durch die der Wahlstecker (9) hindurchreicht.

7. Elektromotor nach einem der vorherigen Ansprüche, **dadurch gekennzeichnet,** daß an dem Kontaktblock (4) wahlweise ein Anschlußstecker (26) für Automatik-Schaltgeräte befestigbar ist.

8. Elektromotor nach einem der Ansprüche 4 bis 7, **dadurch gekennzeichnet,** daß die Platine (17) Kontaktteile aufweist, die von den Kontaktstiften (15) des Wahlsteckers (9) kontaktiert werden.

## Claims

1. An electric motor for a centrifugal pump, having a contact block (4) which is attached to the winding head (3) and to whose contacts (14) the winding wire ends are directly attached, a selector plug (9) being provided via whose different insertion positions the required speed and/or the required voltage can be selected, characterized in that the selector plug (9) is attached directly to the contact block (4) of the winding head (3).

2. An electric motor according to claim 1, characterized in that the selector plug (9) extends through the casing wall (1) of the motor.

3. An electric motor according to claim 1, characterized in that the selector plug (9) is disposed on the outside of the motor casing and its contacts (15) extend through the casing wall (1) of the motor as far as the contacts (14) of the contact block (4).

4. An electric motor according to claim 1, characterized in that the selector plug (9) is disposed on a line plate (17) or some other electrical line element situated outside the motor casing and its contacts (15) extend through the plate (17) and the casing wall (1) of the motor as far as the contacts (14) of the contact block (4).

5. An electric motor according to claim 4, characterized in that the plate (17) is also attached on or in a terminal box (16).

6. An electric motor according to one of claims 1 to 4, characterized in that attached to the outside of the motor casing is a support plate to which the terminal box (16) is attached or which forms the terminal box and through which the selector plug (9) extends.

7. An electric motor according to one of the preceding claims, characterized in that a connecting plug (26) can be optionally attached to the contact block (4) for automated switchgear.

8. An electric motor according to one of claims 4 to 7, characterized in that the plate (17) has contact parts which are contacted by the contact pins (15) of the selector plug (9).

## Revendications

1. Moteur électrique d'une pompe centrifuge avec un bloc de contacts (4) fixé à la tête de bobine (3) et aux contacts (14) duquel les extrémités des fils de bobine sont fixées directement, un connecteur de sélection (9) étant prévu, par les différentes positions d'enfichage duquel on peut sélectionner la vitesse de rotation souhaitée et/ou la tension souhaitée, caractérisé en ce que le connecteur de sélection (9) est enfiché directement sur le bloc de contacts (4) de la tête de bobine (3).

2. Moteur électrique selon le revendication 1, caractérisé en ce que le connecteur de sélection (9) passe à travers la paroi du carter (1) du moteur.

3. Moteur électrique selon la revendication 1, caractérisé en ce que le connecteur de sélection (9) s'appuie à l'extérieur sur le carter du moteur et ses contacts (15) passent à travers la paroi du carter (1) du moteur jusqu'aux contacts (14) du bloc de contacts (4).

4. Moteur électrique selon la revendication 1, caractérisé en ce que le connecteur de sélection (9) s'appuie sur une platine de circuit (17) se trouvant à l'extérieur du carter du moteur ou sur un autre élément de circuit électrique et ses contacts (15) passent à travers la platine (17) et la paroi du carter (1) du moteur jusqu'aux contacts (14) du bloc de contacts (4).

5. Moteur électrique selon la revendication 4, caractérisé en ce que la platine (17) est fixée additionnellement dans ou sur une boîte de connexions (16).

6. Moteur électrique selon l'une des revendications 1 à 4, caractérisé en ce qu'une plaque de support est fixée à l'extérieur au carter du moteur, sur laquelle est fixée la boîte de connexions (16) ou qui forme la boîte de connexions et à travers laquelle passe le connecteur de sélection (9).

7. Moteur électrique selon l'une des revendications précédentes, caractérisé en ce qu'une fiche de raccordement (26) pour un appareillage électrique automatique, puisse être fixée facultativement au bloc de contacts (4).

8. Moteur électrique selon l'une des revendications 4 à 7, caractérisé en ce que la platine (17) présente des pièces de contact qui sont contactées par les broches de contact (15) du connecteur de sélection (9).

Fig. 1

EP 0 321 646 B1

Fig. 2

EP 0 321 646 B1

Fig. 3